# EUROPÄISCHE PATENTSCHRIFT

(11) **EP 0 402 641 B1**
(45) Veröffentlichungstag und Bekanntmachung des Hinweises auf die Patenterteilung: **20.12.1995**
(21) Anmeldenummer: 90109178.5
(22) Anmeldetag: 16.05.1990
(51) Int. Cl.: B60R 16/02, B60H 1/22

(54) **Elektrische Fahrzeugheizung**
Electric heating for a vehicle
Chauffage électrique pour voiture

(30) Priorität: 15.06.1989 DE 3919563
(43) Veröffentlichungstag der Anmeldung: 19.12.1990
(73) Patentinhaber: ROBERT BOSCH GMBH, 70442 Stuttgart (DE)
(72) Erfinder: Kuhn, Edgar, Dipl.-Ing., D-7016 Gerlingen/Leonberg (DE); Leunig, Rainer, D-7016 Gerlingen (DE); Mittag, Rainer, Dipl.-Ing., D-7014 Kornwestheim (DE); Schramm, Günter, D-7143 Vaihingen/Enzweihingen (DE)

(56) Entgegenhaltungen:
- DE-A- 1 438 175
- DE-A- 2 944 211
- DE-A- 3 043 885
- DE-A- 3 509 073
- FR-A- 2 405 159
- Bosch Kraftfahrtechnisches Taschenbuch; VDI-Verlag, Düsseldorf (DE); 19. Auflage 1984; Seiten 432-437

## Beschreibung

### Stand der Technik

Die Erfindung geht aus von einer elektrischen Fahrzeugheizung nach der Gattung des Hauptanspruchs.

Bei der herkömmlichen Heizung im Kraftfahrzeug wird der Fahrgastraum mit Hilfe des Kühlwassers des Motors erwärmt. Bei niedrigen Außentemperaturen dauert es verhältnismäßig lange, bis der Fahrgastraum die gewünschte Temperatur erhält.

Um die Erwärmung des Fahrgastraumes zu beschleunigen, kann mit Hilfe des Generators und eines Heizelementes die notwendige Wärme schneller erzeugt werden.

Eine solche elektrische Heizung für Kraftfahrzeuge ist beispielsweise aus der DE-OS 35 09 073 bekannt. Dort wird zur Ausnutzung des Gleichstromüberschusses eines eine Batterie für die Verbraucher speisenden Generators eine Anzahl von Heizwiderständen an die Generatorplusklemme bzw. an die Batterieplusklemme angeschlossen. Dabei ist eine Steuerung vorgesehen, die verhindert, daß die zu Heizzwecken benötigte Generatorleistung eine Entladung der Batterie verursacht.

Bei dieser bekannten elektrischen Fahrzeugheizung wird jedoch zum einen nur der überschüssige Teil der Generatorleistung zur Aufheizung des Fahrzeuges verwendete; dies führt dazu, daß die elektrische Fahrzeugheizung nicht sehr effektiv ist. Zum anderen sind keine Anzeigemöglichkeiten für auftretende Fehler, beispielsweise bei Unterbrechung der Batterieladeleitung oder bei einer Unterbrechung der Verbindungsleitung zwischen Generator und Heizelement vorgesehen.

Eine dem Oberbegriff des Anspruchs 1 entsprechende elektrische Heizung, die aus Widerstandsheizelementen besteht, die von einem Fahrzeuggenerator mit Energie versorgt werden, ist aus der DE-OS 30 43 885 bekannt. Es wird dabei bei einer Scheibenheizung der Wechselstromgenerator kurzzeitig von der Batterie abgetrennt und ausschließlich zur Versorgung der Widerstandsheizelemente verwendet. Dazu wird der Spannungsregler ausgeschaltet und der Generator in ungeregeltem Betrieb betrieben, so daß die Ausgangsspannung auf höhere Werte steigen kann und damit eine gegenüber dem normalen Betrieb höhere Leistung erhalten wird. Nach Beendigung der Heizung wird beispielsweise, sobald ein Temperaturfühler eine bestimmte Temperatur rergistriert, der Wechselstromgenerator wieder mit dem Regler geregelt und die Batterieversorgung in üblicher Weise durchgeführt.

Bei dieser bekannten Einrichtung wird jedoch der Batterieladezustand nicht berücksichtigt, so daß unter ungünstigen Umständen während der Heizung die Spannungsversorgung für wichtige Verbraucher des Bordnetzes zusammenbrechen kann. Weiterhin können keine Fehlererkennungen durchgeführt werden.

Eine weitere Widerstandsheizung, die von einem Drehstromgenerator in einem Kraftfahrzeug versorgt wird, ist aus der DE-OS 29 44 211 bekannt. Bei dieser Heizung wird jedoch gleichzeitig der Heizwiderstand und das Bordnetz bzw. die Batterie vom Generator versorgt. Es sind Maßnahmen angegeben, die eine Heizung verhindern sollen, sofern besondere Bedingungen im Bordnetz eintreten, als Beispiel wird angegeben, daß während des Startvorgangs eine Scheibenheizung unterbleiben sollte. Bei diesem Heizsystem darf jedoch die Generatorausgangsspannung nicht höher als eine für das Bordnetz zulässige Maximalspannung seine. Damit ist die maximal erzielbare Heizleistung zu gering.

Die Aufgabe der vorliegenden Erfindung besteht darin, eine elektrische Fahrzeugheizung so auszugestalten, daß bei Vorliegen eines guten Batterieladezustandes eine besonders effektive Heizung stattfinden kann, wobei die Leistung, die dem Heizwiderstand zugeführt wird, die übliche Generatorleistung überschreiten kann. Weiterhin soll beim Vorliegen bestimmter Betriebszustände bzw. nach erkannten Fehlern im Bordnetz eine Heizung unterbunden werden.

Gelöst wird diese Aufgabe durch eine elektrische Heizung in einem Fahrzeug mit den Merkmalen des Anspruchs 1.

### Vorteile der Erfindung

Die erfindungsgemäße elektrische Fahrzeugheizung hat gegenüber bekannten Fahrzeugheizungen insbesondere auch gegenüber bekannten elektrischen Fahrzeugheizungen den Vorteil, daß die Erwärmung des Fahrgastraumes beschleunigt durchgeführt wird, daß durch zeitweiliges Umschalten des Generators von "Laden" auf "Heizen" während der Zeit, in der der Generator auf "Heizen" geschaltet ist, die gesamte Generatorausgangsleistung zum Heizen verwendet wird. Daher erfolgt die Erwärmung des Fahrgastraumes sehr schnell.

Von großem Vorteil ist, daß ein ohnehin vorhandener Generator verwendet werden kann und daß stromloses Umschalten von "Laden" in "Heizen" und umgekehrt, erreicht werden kann, wodurch sichergestellt wird, daß praktisch keine Störungen auftreten. Da gleichzeitig der Ladezustand der Batterie überwacht wird und ein Umschalten des Generators auf "Heizen" nur bei gutem Ladezustand der Batterie erfolgen kann, ist gewährleistet, daß die Batterie nicht zu sehr entladen wird.

Besonders vorteilhaft ist, daß eine Anzahl von möglicherweise auftretenden Fehlern erkannt und angezeigt werden und daß gegebenenfalls die elektrische Heizung abgeschaltet wird, falls auftretende Fehler dies erfordern.

Als Regler wird ein Spannungsregler mit nachfolgendem Stromwandler eingesetzt, daher kann eine kontinuierliche Heizleistungsregelung mit Hilfe des vom Stromwandler gesteuerten, an die Erfordernisse anpaßbaren Erregerstromes erfolgen.

### Zeichnung

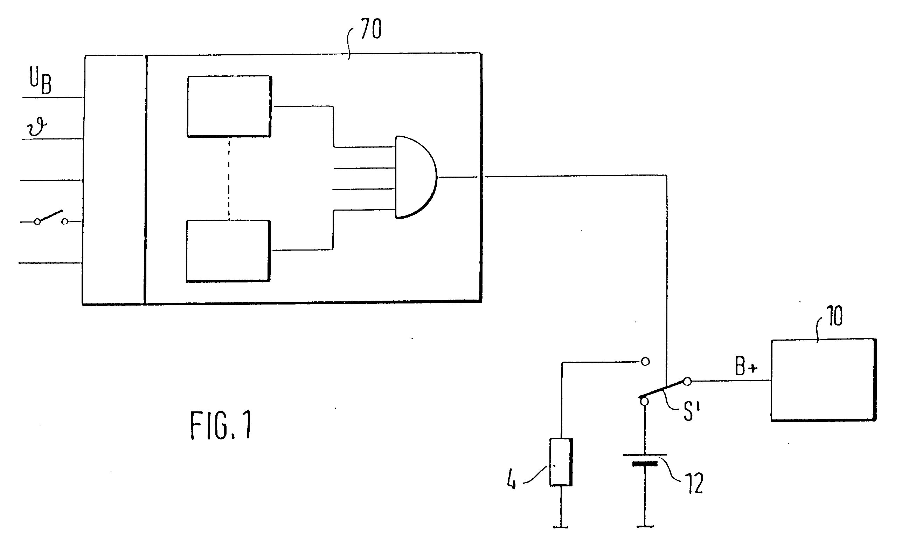

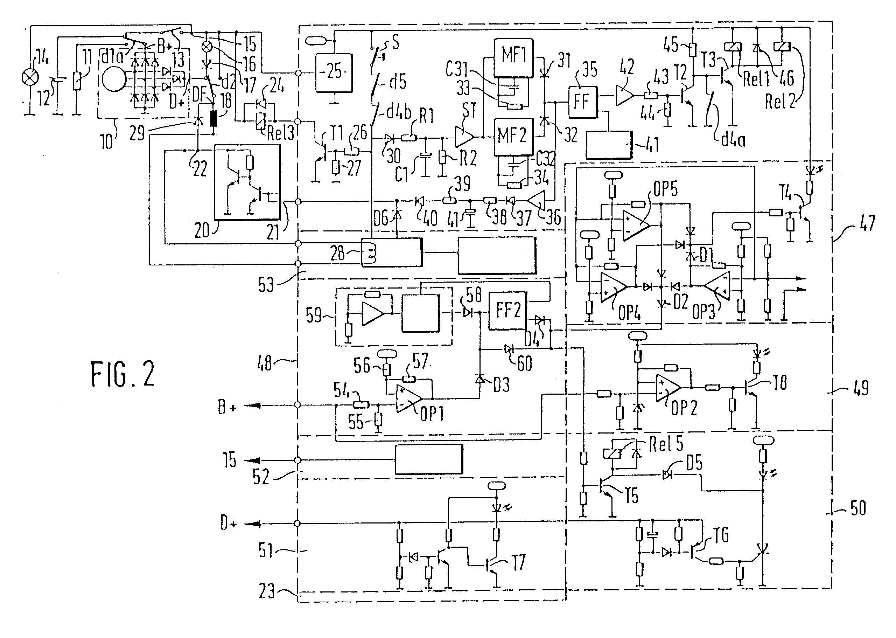

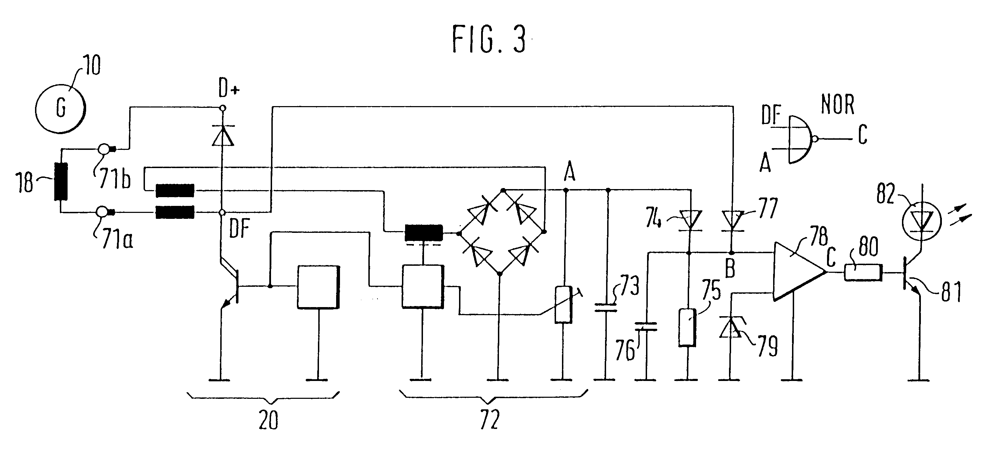

Figur 1 stellt ein grobes Übersichtsbild der Erfindung dar, Figur 2 zeigt ein Gesamtschaltbild mit einem herkömmlichen Generator mit einem Spannungsregler, einer Batterie, Verbrauchern, einem Zündschalter und einer Ladekontrollampe sowie einem Heizelement zur elektrischen Erwärmung des Fahrgastraumes und einer Ansteuer- und Fehlererkennungsschaltung für dieses Heizelement, Figur 3 zeigt ein Schaltbild für einen Betrieb mit Stromwandler, wobei besonders der Teil der Schaltung verdeutlicht wird, der zur Erkennung einer Feldunterbrechung vorgesehen ist.

### Beschreibung der Ausführungsbeispiele

Figur 1 zeigt ein grobes Übersichtsbild der Erfindung dem die wesentlichen Komponenten zu entnehmen sind.

Einem bekannten Generator 10 kann über einen Schalter S' wahlweise ein Heizelement 4, beispielsweise ein ohmscher Heizwiderstand 4 oder eine Batterie 12 zugeordnet werden. Der Schalter S' umfaßt mehrere Einzelschalter, die entweder direkt, etwa durch Knopfdruck oder aber mittels einer Ansteuerung über ein Relais umgeschaltet werden. Dabei steht der Schalter S' mit einer Einrichtung 70 in Verbindung. Diese Einrichtung 70 weist mehrere Anschlüsse für Eingangssignale beispielsweise von einem Temperatursensor, der die Temperatur ϑ im Fahrgastraum mißt, für ein Voltmeter, das die Batteriespannung U_{B} mißt oder für einen Temperatursensor, der die Temperatur des Heizwassers mißt, auf, weitere Eingangssignale sind möglich.

Weiterhin weist diese Einrichtung 70 eine Sicherheitslogik auf, die mehrere Überwachungseinheiten umfaßt, beispielsweise für die Batteriespannung, für Betrieb ohne Batterie, für die Feldunterbrechung, für eine Unterbrechung des Heizelementes. Aufgabe dieser Sicherheitslogik ist, eine Freigabe zum "Heizen" nur dann vorzusehen, wenn der Wert aller zu überwachenden Größen innerhalb eines Toleranzbereiches liegt. Liegt ein von der Sicherheitslogik überwachter Wert außerhalb des Toleranzbereiches oder hat die Fahrzeugtemperatur einen vorgegebenen Wert erreicht oder tritt innerhalb der gesamten Anordnung, die prinzipiell das ganze Bordnetz umfassen kann, ein Fehler auf, kann der Generator nicht zum "Heizen" verwendet werden, gleichzeitig wird dies angezeigt. Dabei kann die Anzeige mittels der Ladekontrollampe oder auch mittels einer bzw. mehrerer Lampen oder Leuchtdioden erfolgen. Die im Heizwiderstand erzeugte Wärme kann entweder zur schnellen Aufheizung des Kühlwassers oder direkt zur Fahrzeugheizung, beispielsweise über ein Gebläse, verwendet werden.

Der Heizwiderstand kann auch eine elektrisch beheizbare Scheibe des Fahrzeuges repräsentieren, die direkt aus dem Generator mit elektrischer Energie versorgt wird.

Statt eines einzigen Generators können auch zwei Generatoren verwendet werden, wobei einer zum "Heizen" oder "Laden" und einer nur zum "Laden" vorgesehen ist.

In Figur 2 ist das Gesamtschaltbild der elektrischen Fahrzeugheizung sowie eines Teiles des Fahrzeugbordnetzes und der für die Ansteuerung und Fehlererkennung der elektrischen Heizung erforderlichen Schaltungsanordnung dargestellt. Dabei werden die bekannten Baugruppen wie der Drehstromgenerator mit den zugeordneten Gleichrichterbrücken sowie der Spannungsregler usw. nur schematisch dargestellt.

Mit 10 ist ein bekannter Drehstromgenerator mit den zugehörigen Plus- und Minusdioden sowie den Erregerdioden und den üblichen Anschlüssen B+, D+, DF und D- bezeichnet. Über einen Schalter d1a kann die Generatorklemme B+ wahlweise mit einem gegen Masse geschalteten Heizelement 11 oder mit dem Pluspol einer Batterie 12, deren Minuspol mit Masse verbunden ist, verbunden werden. Zwischen den Pluspol der Batterie 12 und Masse sind außerdem über den Zündschalter 13 Verbraucher 14 geschaltet.

Der batterieferne Anschluß des Zündschalters 13 wird im weiteren mit Klemme 15 bezeichnet. Diese Klemme 15 ist über eine Reihenschaltung der Ladekontrollampe 16 und einer in Durchlaßrichtung gepolten Diode 17 mit der Generatorklemme D+ verbunden. An die Generatorklemme D+ kann über einen Schalter mit dem Kontakt d2 die Erregerwicklung 18 des Generators 10 angeschlossen werden. Die mit DF verbundene Seite des Schalters d2 kann jedoch auch direkt mit Klemme 15 verbunden werden. An die Klemmen 15, 21, 22, B+ und D+ sind die entsprechenden Eingangsklemmen der für die Steuerung und Fehleranzeige der elektrischen Heizung vorgesehenen Schaltungsanordnung 23 direkt angeschlossen, zusätzlich führt noch eine Leitung mit einem Relais Rel3 und dazu parallel geschalteter Löschdiode 24 von der Klemme 15 zur Schaltungsanordnung 23.

Die Steuer- und Fehleranzeige-Schaltungsanordnung 23 umfaßt eine Stabilisierungsschaltung 25 die eine positive stabilisierte Spannung U_{Stab.} liefert, deren erster Eingang an die Klemme 15 angeschlossen ist, deren zweiter Eingang mit Masse verbunden ist und deren dritter Eingang mit einen Schalter S, mit dem vom Heiz- in den Ladezustand umgeschaltet werden kann, verbunden ist, wobei sich an den Schalter S weitere Schalter mit den Kontakten d5 und d4b anschließen, die über einen Widerstand 26 mit der Basis eines Transistors T1 verbunden sind, dessen Emitter gegen Masse geschaltet ist und dessen Kollektor mit dem Relais Rel3 verbunden ist. Zwischen der Basis des Transistors T1 und Masse ist ein weiterer Widerstand 27 angeordnet.

Der Verbindungspunkt zwischen dem Kontakt d4b und dem Widerstand 26 ist außerdem mit einem Eingang eines Stromwandlers 28 verbunden, der seinerseits mit einem weiteren Eingang an Klemme 22 des Spannungsreglers verbunden ist. Zwischen Klemme 22 und Klemme DF liegt eine Diode 29, wobei die Anode der Klemme 22 zugewandt ist.

An den Verbindungspunkt zwischen Kontakt d4b und Widerstand 26 schließt sich eine Serienschaltung einer Diode 30, eines Widerstandes R1 und eines Schmitt-Triggers ST an, wobei zwischen den Eingang des Schmitt-Triggers und Masse eine Parallelschaltung eines Kondensators C1 und eines Widerstandes R2 geschaltet ist. Der Ausgang des Schmitt-Triggers ST führt auf zwei parallel geschaltete Monoflops MF1 und MF2, deren Ausgänge miteinander über zwei Dioden 31, 32 verbunden sind, wobei die beiden Dioden 31 und 32 so geschaltet sind, daß die Anoden von 31 und 32 mit dem entsprechenden Monoflop verbunden sind und die Kathoden der beiden Dioden 31 und 32 miteinander verbunden sind.

Den beiden Monoflops MF1 und MF2 ist jeweils ein Kondensator C31, C32 und ein Widerstand 33, 34 zugeordnet.

Der Verbindungspunkt der beiden Dioden 31 und 32 führt einmal auf ein Flipflop 35 und zum anderen über eine Serienschaltung eines Verstärkers 36, einer Diode 37, eines Widerstandes 38, eines Widerstandes 39 und einer Diode 40 zum Eingang 21 des Spannungsreglers 20. Dabei ist der Verbindungspunkt der Widerstände 38 und 39 über einen Kondensator 41 mit Masse verbunden und die Kathode der Diode 40 ist über eine weitere Diode D6 mit dem Stromwandler 28 verbunden.

Der eine Ausgang des Flipflops 35 ist mit einer, "Laden" bzw. "Heizen" anzeigenden Vorrichtung 41 verbunden, während der zweite Ausgang des Flipflops 35 über eine Serienschaltung eines Verstärkers 42 und eines Widerstandes 43 mit der Basis eines Transistors T2 verbunden ist. Die Basis dieses Transistors T2 ist über einen Widerstand 44 mit Masse verbunden, der Emitter des Transistors T2 ist ebenfalls mit Masse verbunden während der Kollektor von T2 über einen Widerstand 45 mit der Schaltung 25 verbunden ist. Parallel zur Kollektor-Emitter-Strecke des Transistors T2 ist ein Schalter d4a gelegt, der außerdem parallel zur Basis-Emitter-Strecke eines weiteren Transistors T3 liegt. Zwischen den Kollektor von T3 und Schaltung 25 liegt eine Parallelschaltung eines Relais Rel1, einer Diode 46 und eines Relais Rel2.

Neben den bisher beschriebenen Bauelementen umfaßt die Steuer- und Fehleranzeigeschaltung 23 weitere Baugruppen, die eine Temperaturbestimmung im Heizwasser und eine Überwachung der Batteriespannung ermöglichen und weiterhin insgesamt fünf Baugruppen, die verschiedene möglicherweise auftretende Fehler erkennen und anzeigen können. Diese Baugruppen sollen, sofern sie erfindungsrelevant sind für sich bzw. im Zuge der Erklärung der Funktionsweise der Steuer- und Fehleranzeigeschaltung 23 beschrieben werden, es sind dies im einzelnen:
Eine Baugruppe zur Temperaturbestimmung im Heizwasser 47, eine Baugruppe zur Batteriespannungsbestimmung und Überwachung 48, eine Baugruppe, mit der eine Fehlfunktion der Batteriespannungsüberwachung erkannt werden kann 49, eine Baugruppe, die eine Unterbrechung der Zuleitung zum Heizelement anzeigen kann 50, eine Baugruppe, die eine Feldunterbrechung erkennt und anzeigt 51, eine Baugruppe, die bei Betrieb ohne Batterie, beispielsweise bei abgefallenen Batteriekabel anspricht 52 und eine Anzeigeschaltung zur Erkennung einer Feldunterbrechung bei Betrieb mit Stromwandler 53. Diese einzelnen Baugruppen werden jeweils mit der in der Stabilisierungsschaltung 25 erzeugten positiven Spannung U_{Stab} versorgt.

Die Baugruppe zur Batteriespannungsüberwachung 48 enthält einen Operationsverstärker OP1, dessen invertierender Eingang über einen Widerstand 54 mit der Batterieklemme B+ und über einen Widerstand 55 mit Masse verbunden ist. Der nicht invertierende Eingang des Operationsverstärkers OP1 ist über einen Widerstand 56 an eine stabilisierte Spannung angeschlossen, zwischen dem nicht invertierenden Eingang des OP1 und seinem Ausgang liegt ein weiterer Widerstand 57.

Der Ausgang des Operationsverstärkers OP1 ist weiterhin über eine Diode D3 mit dem Eingang eines Flipflops FF2 und über eine weitere Diode 58 mit einem Zeitglied 59 verbunden. Vom Zeitglied 59 führt ein Anschluß zu einem Ausgang des Flipflops 2. Der andere Ausgang des Flipflops 2 ist über eine Diode D4 mit den Baugruppen 47 und 50 verbunden. Zwischen dem Eingang des Flipflops 2 und seinem Ausgang liegt eine weitere Diode 60.

Figur 3 zeigt eine mögliche Anzeigeschaltung zur Erkennung einer Feldunterbrechung. Dabei ist in einem bekannten Drehstromgenerator 10 mit einer Feldwicklung 18 über Schleifringe 71a, 71b ein bekannter Spannungsregler 20 und ein für sich ebenfalls bekannter Stromregler 72 nachgeschaltet. An diesen Stromregler 72 ist die eigentliche Vorrichtung zur Feldunterbrechungserkennung angeschlossen.

Zwischen den Punkt A des Stromreglers 72 und Masse ist ein Kondensator 73 gelegt, parallel zu diesen Kondensator 73 liegt eine Reihenschaltung einer Diode 74 und eines Widerstandes 75, parallel zum Widerstand 75 liegt ein weiterer Kondensator 76. Der Verbindungspunkt zwischen der Kathode der Diode 74 und dem Widerstand 75 ist mit der Kathode einer weiteren Diode 77 verbunden, deren Anode an die Generatorklemme DF angeschlossen ist. Weiterhin ist die Kathode der Diode 77 mit einem Eingang B eines Operationsverstärkers 78 verbunden, der andere Eingang des Operationsverstärkers 78 ist über eine Zenerdiode 79 mit Masse verbunden, während der Ausgang C des Operationsverstärkers 78 über einen Widerstand 80 mit der Basis eines Transistors 81 verbunden ist. Der Kollektor dieses Transistors 81 ist mit einer Leuchtdiode 82 verbunden, der Emitter des Transistors 81 mit Masse.

Dabei wirkt die Anzeigeschaltung zur Erkennung einer Feldunterbrechung wie ein NOR-Glied mit den Eingängen DF und A und dem Ausgang C.

Die Figur 3, stellt eine Ausgestaltung der Baugruppen 52 und 53 in Figur 1 dar, wobei einige Elemente aus Figur 3 bereits aus Figur 1 bekannt sind. Für das Verständnis der Schaltung nach Figur 1 muß teilweise auch auf die Figur 3 zurückgegriffen werden.

Funktionsweise der Schaltung nach Figur 1, 2 bzw. 3:
Wenn der Schalter S (bzw. S') auf "Laden" steht, lädt der Generator 10 über den Schalter (Kontakt) d1a die Batterie und versorgt die Verbraucher. Über den Kontakt d2 ist das Erregerfeld an D+ gelegt. Dies entspricht einem Schaltzustand wie er aus heutigen Fahrzeugen bekannt ist.

### Betrieb mit Stromwandler

Wird der eingezeichnete Stromwandler 72 in Figur 3 zusammen mit dem Spannungsregler 20 nach Figur 3 verwendet, besteht die Möglichkeit einer kontinuierlichen Heizleistungsregelung mit Hilfe des Erregerstromes (die Heizleistung kann auf einen vorgegebenen Wert geregelt werden). Zur Heizung wird dabei der Schalter S (Fig 2) auf "Heizen" umgeschaltet.

Es wird dann nach der Generatorentregung über D6 der Erregerstrom des Generators vom Stromwandler gesteuerte. Im Ladebetrieb ist der Stromwandler ausgeschaltet. Die Anzeige der Feldunterbrechung erfolgt auf folgende Weise:
Fehlerfall: Feldunterbrechnung (Figur 3a)
Die Schaltung zeigt Unterbrechungen zwischen D+ und DF, wie z.B. Feldunterbrechung oder abgelaufene Kohlen, optisch an. Durch die Kombiantion von Spannungs- und Stromregler, verknüpft mit einem NOR-Gatter, ergeben sich folgende Funktionen:
1. Ist bei einer intakten Anlage der Feldstrom klein, liegt an DF eine hohe, an Punkt A eine kleinere Spannung an. Am Ausgang des NOR-Gliedes erscheint 0 (1̅v̅0̅=0). Die LED leuchtet nicht.
2. Ist der Feldstrom groß, ist die Spannung an DF klein und Punkt A groß, es gilt 0̅v̅1̅=0 was bedeutet: In beiden Fällen leuchtet die LED nicht.
3. Hat das Feld Unterbrechung, so sind die Spannungen an DF und an Punkt A 0, woraus sich ergibt 0̅v̅0̅=1, die LED leuchtet, der Fehler wird angezeigt.

## Patentansprüche

1. Elektrische Heizung in einem Fahrzeug, das ein elektrisches Bordnetz umfaßt, mit einem Generator (10) mit einer Erregerwicklung (18) und einem dem Generator nachgeschalteten Regler (20, 28), mit einer Batterie (12) und Verbrauchern (14), die mit der Batterie in Verbindung stehen, mit einer Ladekontrollampe (16) sowie einem Heizelement (4, 11) und Schaltern (S, d1a), die in einer Schalterstellung den Generator (10) mit der Batterie (12) und in der anderen Schalterstellung mit dem Heizelement (4, 11) verbinden, und mit einer Baugruppe (48) zur Batteriespannungsüberwachung, dadurch gekennzeichnet, daß eine Steuer- und Fehleranzeigeschaltungsanordnung (23) vorgesehen ist, die weitere Mittel zur Fehlererkennung (23) im elektrischen System umfaßt, die Spannungen im Bordnetz messen und logische Elemente aufweisen, deren Verknüpfung miteinander die Fehlererkennung ermöglichen, wobei eine Einrichtung (70) vorgesehen ist, die die Verbindung zwischen dem Heizelement (4, 11) und dem Generator (10) dann unterbricht, wenn ein Fehler oder ein unerlaubter Betriebszustand auftritt, wenigstens jedoch wenn die Batteriespannung unterhalb eines Schwellwertes liegt, wobei der dem Generator (10) nachgeschaltete Regler aus einem Spannungsregler (20) besteht, der zwischen der Erregerwicklung (18) und der Steuer- und Fehleranzeigeschaltungsanordnung (23) liegt, und daß der Regler aus einem Spannungsregler (20) mit nachgeschaltetem Stromwandler (28), der direkt zwischen der Erregerwicklung (18) und dem Spannungsregler (20) angeschlossen ist, besteht, wenn der Generator (10) mit dem Heizelement (4, 11) verbunden ist, wobei die Heizleistung des Heizelements (4, 11) mit Hilfe des vom Stromwandler (28) gesteuerten Erregerstroms geregelt wird.

2. Elektrische Fahrzeugheizung nach Anspruch 1, dadurch gekennzeichnet, daß der Betriebszustand "Heizen" über eine Anzeigemöglichkeit angezeigt wird.

3. Elektrische Fahrzeugheizung nach einem der vorhergehenden Ansprüche, dadurch gekennzeichnet, daß das Heizelement (11) nach Erreichen einer bestimmten Betriebstemperatur vom Generator abgekoppelt wird.

4. Elektrische Fahrzeugheizung nach einem der vorhergehenden Ansprüche, dadurch gekennzeichnet, daß die Umschaltung zwischen dem Betriebszustand "Heizen" und dem Betriebszustand "Laden" und umgekehrt nur bei entregtem Generator erfolgt.

5. Elektrische Fahrzeugheizung nach einem der vorhergehenden Ansprüche, dadurch gekennzeichnet daß zwei Generatoren vorgesehen sind, wobei einer zum "Heizen" oder "Laden" und einer nur zum Laden vorgesehen ist.

6. Elektrische Fahrzeugheizung nach einem der vorhergehenden Ansprüche, dadurch gekennzeichnet, daß der Erregerstrom in Abhängigkeit von der Diodentemperatur begrenzt wird.

7. Elektrische Fahrzeugheizung nach einem der vorhergehenden Ansprüche, dadurch gekennzeichnet, daß bei Auftreten eines Fehlers während des Heizbetriebes eine Umschaltung von "Heizen" in "Laden" erfolgt und daß bei Auftreten eines Fehlers, der von den Mitteln zur Fehlererkennung (23) im elektrischen System erkannt wird, während des Ladebetriebes ein Umschalten auf "Heizen" nicht möglich ist.

8. Elektrische Fahrzeugheizung nach Anspruch 1, dadurch gekennzeichnet, daß das Heizelement (11) ein ohmscher Widerstand ist.

9. Elektrische Fahrzeugheizung nach Anspruch 1, dadurch gekennzeichnet, daß das Heizelement eine elektrisch heizbare Scheibe darstellt.

## Claims

1. Electric heater in a vehicle which includes a vehicle electrical system, with a generator (10) with an exciter winding (18) and a controller (20, 28) connected downstream of the generator, with a battery (12) and loads (14) which are connected to the battery, with a charge monitoring lamp (16) and a heating element (4, 11) and switches (S, d1a) which, in one switch position, connect the generator (10) to the battery (12) and, in the other switch position, connects the generator (10) to the heating element (4, 11), and with an assembly group (48) for monitoring the battery voltage, characterized in that a control and fault display circuit arrangement (23) is provided which comprises further means for detecting (23) faults in the electrical system, which means measure voltages in the vehicle electrical system and have logic elements whose connection to one another permits the fault detection, a device (70) being provided which interrupts the connection between the heating element (4, 11) and the generator (10) whenever a fault or an unacceptable operating state occurs, at least, however, when the battery voltage lies below a threshold value, the controller which is connected downstream of the generator (10) consisting of a voltage controller (20) which lies between the exciter winding (18) and the control and fault display circuit arrangement (23) and in that the controller comprises a voltage controller (20) with downstream current converter (28) which is connected directly between the exciter winding (18) and the voltage controller (20) when the generator (10) is connected to the heating element (4, 11), the heating power of the heating element (4, 11) being controlled using the exciter current controlled by the current converter (28).

2. Electric vehicle heater according to Claim 1, characterized in that the "heating" operating state is indicated by means of a display facility.

3. Electric vehicle heater according to one of the preceding claims, characterized in that the heating element (11) is disconnected from the generator after a specific operating temperature is reached.

4. Electric vehicle heater according to one of the preceding claims, characterized in that the change-over between the "heating" operating state and the "charging" operating state, and vice versa, only occurs when the generator is de-energized.

5. Electric vehicle heater according to one of the preceding claims, characterized in that two generators are provided, one being provided for "heating" or "charging" and one only being provided for charging.

6. Electric vehicle heater according to one of the preceding claims, characterized in that the exciter current is limited as a function of the diode temperature.

7. Electric vehicle heater according to one of the preceding claims, characterized in that when a fault occurs during the heating mode a change-over from "heating" into "charging" takes place and in that when a fault occurs which is detected by the means for fault detection (23) in the electric system during the charging mode, a change-over to "heating" is not possible.

8. Electric vehicle heater according to Claim 1, characterized in that the heating element (11) is an ohmic resistor.

9. Electric vehicle heater according to Claim 1, characterized in that the heating element constitutes an electrically heatable window pane.

## Revendications

1. Chauffage électrique pour un véhicule, qui dispose d'un réseau électrique de bord, avec une génératrice (10), avec un enroulement d'excitation (18) et un régulateur (20, 28) monté après la génératrice, avec une batterie (12) et des appareils consommateurs d'électricité (14), qui sont en liaison avec la batterie, avec une lampe de contrôle de la charge (16) ainsi qu'avec un élément chauffant (4, 11) et des commutateurs (S, d1a), qui relient dans une position de commutation la génératrice (10) à la batterie (12) et dans l'autre position de commutation la génératrice à l'élément de chauffage (4, 11) et avec un sous-ensemble (48) servant à contrôler la tension de la batterie, chauffage électrique pour un véhicule, caractérisé en ce que l'on prévoit un circuit de commande et d'indication de défaut (23) qui comprend d'autres moyens pour détecter des défauts dans le système électrique, moyens qui mesurent les tensions dans le réseau électrique de bord et présentent des éléments logiques, qui en les combinant entre eux permettent de détecter les défauts, un dispositif (70) étant prévu, qui interrompt alors la liaison entre l'élément de chauffage (4, 11) et la génératrice (10), quand il se produit un défaut ou un état de fonctionnement non autorisé, au moins toutefois quand la tension de la batterie se trouve en-dessous d'une valeur de seuil, le régulateur monté en aval de la génératrice (10) consistant en un régulateur de tension (20), qui se trouve entre l'enroulement d'excitation (18) et le circuit de contrôle et d'indication de défaut (23) et en ce que le régulateur consiste en un régulateur de tension (20) avec le transformateur d'intensité (28) monté en aval, qui est directement raccordé entre l'enroulement d'excitation (18) et le régulateur de tension (20), quand la génératrice (10) est reliée à l'élément chauffant (4, 11), la puissance de l'élément chauffant (4, 11) étant réglée à l'aide du courant d'excitation commandé par le transformateur d'intensité (28).

2. Chauffage électrique pour véhicule, selon la revendication 1, caractérisé en ce que l'état de fonctionnement "chauffage" est indiqué au moyen d'une possibilité d'indication

3. Chauffage électrique pour véhicule, selon l'une des revendications précédentes, caractérisé en ce que l'élément de chauffage (11) est déconnecté de la génératrice quand une température de fonctionnement déterminée a été atteinte.

4. Chauffage électrique pour véhicule, selon l'une des revendications précédentes, caractérisé en ce que la commutation entre la position de fonctionnement "chauffage" et la position de fonctionnement "charge" et inversement n'a lieu que quand la génératrice n'est pas excitée.

5. Chauffage électrique pour véhicule selon l'une des revendications précédentes, caractérisé en ce que l'on prévoit deux génératrices, l'une étant prévue pour "chauffer" ou "charger" et l'autre seulement pour charger.

6. Chauffage électrique pour véhicule selon l'une des revendications précédentes, caractérisé en ce que le courant d'excitation est limité en fonction de la température des diodes.

7. Chauffage électrique pour véhicule, caractérisé en ce que lorsqu'un défaut survient pendant le fonctionnement du chauffage il se produit une inversion de "chauffage" sur "charge" et en ce que lorsqu'il survient un défaut, qui est détecté par les moyens servant à détecter les défauts (23) dans le système électrique, il n'est pas possible d'avoir une commutation sur "chauffage" pendant le fonctionnement de charge.

8. Chauffage électrique pour véhicule selon la revendication 1, caractérisé en ce que l'élément chauffant (11) est une résistance ohmique.

9. Chauffage électrique pour véhicule selon la revendication 1, caractérisé en ce que l'élément chauffant représente une vitre qui peut être chauffé électriquement.
